# DEMANDE DE BREVET EUROPEEN

(11) **EP 1 677 021 A2**
(43) Date de publication de la demande: **05.07.2006**
(21) Numéro de dépôt: 05301031.0
(22) Date de dépôt: 08.12.2005
(51) Int. Cl.: F16D 25/10, F16D 48/02

(54) **Embrayage double humide à changements de rapports commandes hydrauliquement**

(30) Priorité: 28.12.2004 FR 0413970
(71) Demandeur: Renault s.a.s., 92100 Boulogne Billancourt (FR)
(72) Inventeur: Parthuisot, Jean-Pierre, 92000 Nanterre (FR)
(74) Mandataire: Rougemont, Bernard

(57) **Abrégé**

L'embrayage double humide (10, 100) comprend un moyeu d'alimentation fixe (52), un moyeu tournant (30, 102) par rapport audit moyeu fixe (52) monté sur ledit moyeu fixe (52) un embrayage à disque(s) intérieur (16) et un embrayage à disque(s) extérieur (14) coaxiaux, solidaires dudit moyeux tournant (30, 102). L'embrayage intérieur (16) est commandé par un circuit de commande d'embrayage intérieur comprenant une première chambre de commande (44, 110) et une première chambre de compensation (56, 124). L'embrayage extérieur est commandé par un circuit de commande d'embrayage extérieur comprenant une deuxième chambre de commande (66) et une deuxième chambre de compensation (74). Cet embrayage double est remarquable en ce que lesdites chambres de compensation (56, 124, 74) sont alimentées par un circuit d'alimentation comportant un unique canal (78) dans ledit moyeu d'alimentation fixe (52), un unique canal (81, 132) dans ledit moyeu tournant (30, 102) débouchant sur deux canaux secondaires (82, 84, 138, 140), respectivement un premier canal secondaire (84, 138) alimentant ladite première chambre de compensation (56, 124) et un deuxième canal secondaire (82, 140) alimentant ladite deuxième chambre de compensation (74).

## Description

La présente invention se rapporte à un embrayage double humide à changements de rapports réalisés hydrauliquement et notamment au circuit de distribution et d'alimentation hydraulique des chambres de compensation et des chambres de commande d'un tel embrayage, ce type d'embrayage étant notamment utilisé dans les boîtes de vitesses robotisées à changements de rapports sous couple réalisés hydrauliquement.

Un embrayage double comporte deux embrayages permettant chacun de transmettre le mouvement de rotation du moyeu d'entrée, entraîné par le moteur, à l'un des deux moyeux de sortie.

Dans le cas d'embrayages multi disques, chaque embrayage comporte une pluralité de disques d'embrayage liés en rotation avec le moyeu d'entrée et libres en translation sur celui-ci. Ces disques sont aptes à être serrés entre un piston, dont le mouvement est commandé, et des plateaux de pression, liés en rotation avec l'un des deux moyeux de sortie et libres en translation sur celui-ci. Ainsi, le mouvement de rotation du moyeu d'entrée est transmis à au moins un des moyeux de sorties de l'embrayage. Dans le cas d'un embrayage humide, les disques d'embrayage et les plateaux de pression sont logés dans un carter dans lequel de l'huile circule, permettant ainsi de refroidir les disques d'embrayage et les plateaux de pression.

Par ailleurs, dans une boîte de vitesses à changements de rapport réalisés hydrauliquement, le mouvement du piston est commandé au moyen d'une chambre dite de commande et d'une chambre dite de compensation séparées par le piston. Ainsi, en alimentant la chambre de commande en fluide hydraulique sous pression, on commande le mouvement du piston vers les disques d'embrayage et le serrage par le piston des différents disques d'embrayage. Le retour à la position de repos du piston est réalisé au moyen d'une rondelle conique élastique monté dans la chambre de compensation. Cette chambre de compensation sert quant à elle à maintenir le piston dans sa position de repos, c'est-à-dire éloigné des disques d'embrayage, lorsque l'embrayage est entraîné en rotation. En effet, la rotation de l'embrayage engendre une centrifugation du fluide hydraulique dans la chambre de commande et dans la chambre de compensation avec pour conséquence l'apparition de deux pressions dynamiques. La différence des pressions dynamiques dans ces deux chambres, ajoutée à l'effort de rappel du piston, doit être telle que le piston soit totalement au repos pour laisser aux disques libres le maximum de jeu afin de ne pas donner de la traînée à l'embrayage non commandé.

Dans les dispositifs connus, l'alimentation des deux chambres de commande et des deux chambres de compensation est réalisée à l'aide de quatre canaux distincts provenant d'un moyeu d'alimentation fixe, monté dans le moyeu primaire, ou moyeu d'alimentation tournant. Des segments d'étanchéité assurent l'étanchéité des passages hydrauliques du moyeu fixe vers le moyeu tournant.

Ces dispositifs, bien qu'assurant une bonne alimentation des chambres de commande et des chambres de compensation, présentent l'inconvénient d'être encombrants, en particulier au niveau du moyeu fixe d'alimentation, notamment en ce qui concerne l'encombrement axial de l'embrayage double.

Le but de l'invention est de proposer un dispositif d'embrayage double humide permettant une bonne alimentation hydraulique des chambres de commande et des chambres de compensation, tout en réduisant de manière significative l'encombrement axial au niveau du moyeu d'alimentation.

On atteint ce but de l'invention au moyen d'un embrayage double humide comprenant un moyeu d'alimentation fixe, un moyeu tournant par rapport audit moyeu fixe monté sur ledit moyeu fixe, un embrayage à disque(s) intérieur et un embrayage à disque(s) extérieur coaxiaux, solidaires dudit moyeux tournant. L'embrayage intérieur est commandé par un circuit de commande d'embrayage intérieur comprenant une première chambre de commande et une première chambre de compensation. L'embrayage extérieur est commandé par un circuit de commande d'embrayage extérieur comprenant une deuxième chambre de commande et une deuxième chambre de compensation. Cet embrayage double humide est remarquable en ce que lesdites chambres de compensation sont alimentées par un circuit d'alimentation comportant un unique canal dans ledit moyeu d'alimentation fixe, un unique canal dans le moyeu tournant débouchant sur deux canaux secondaires dans ledit moyeu d'alimentation tournant, respectivement un premier canal secondaire alimentant ladite première chambre de compensation et un deuxième canal secondaire alimentant ladite deuxième chambre de compensation.

Ainsi, avantageusement, le moyeu fixe d'alimentation ne comprend que trois canaux de passage vers le moyeu tournant pour alimenter les chambres de commande et de compensation des embrayages. Par rapport à un moyeu fixe classique comportant quatre canaux, il est ainsi possible de diminuer la longueur du moyeu fixe d'au moins la largeur d'un canal et d'un segment d'étanchéité.

De préférence, le fluide hydraulique circulant dans la première chambre de compensation est évacuée de ladite chambre via un canal d'évacuation prévu dans le moyeu tournant.

Cette disposition, qui réduit le chemin d'écoulement en sortie de la chambre de compensation, améliore le passage du fluide dans la chambre de compensation et réduit donc les effets de pression dynamique dans cette chambre de compensation. II est ainsi possible de réduire les dimensions de la chambre de compensation de l'embrayage intérieur et donc de réduire l'encombrement de cette chambre.

Selon une première variante de l'invention, ledit moyeu tournant est monobloc.

Ainsi, avantageusement, le moyeu tournant est plus facile à monter.

Selon une seconde variante de l'invention, ledit moyeu tournant est réalisé en deux parties principales, de préférence soudées.

Ainsi, avantageusement, le moyeu tournant est plus facile à réaliser.

De préférence, le rappel d'au moins un piston d'embrayage est réalisé au moyen de deux rondelles coniques élastiques montées en opposition dans ladite chambre de compensation correspondante.

Ainsi, avantageusement, pour une même force de rappel exercée par les rondelles coniques sur le piston, l'encombrement radial de l'embrayage peut être réduit.

De manière préférée, le rappel dudit piston de l'embrayage intérieur est réalisé au moyen de deux rondelles coniques élastiques montées en opposition dans ladite première chambre de compensation.

Ainsi, avantageusement, le gain de place dû au montage des deux rondelles coniques opposées est réalisé au niveau de l'embrayage intérieur où l'espace est le plus réduit.

De préférence, la piste intérieure dudit piston annulaire de l'embrayage intérieur est rapportée sur ledit moyeu tournant.

Ainsi, avantageusement, l'encombrement radial de l'embrayage est réduit.

De manière préférée, chacun des deux embrayages aptes à être mis en oeuvre comporte une pluralité de disques d'embrayage et une pluralité de plateaux de friction.

Ainsi, pour transmettre un couple équivalent, on met en oeuvre des disques d'embrayage de diamètre inférieur à celui d'un disque d'embrayage d'un embrayage mono disque, et l'encombrement radial de l'embrayage en est réduit.

Par ailleurs, l'invention concerne également un agencement de deux moyeux intérieur et extérieur coaxiaux, montés l'un à l'intérieur de l'autre, aptes à être intégrés dans un embrayage double humide selon l'invention, remarquable en ce que ledit moyeu intérieur comporte trois canaux distincts débouchant sur la surface latérale extérieure dudit moyeu intérieur, deux premiers canaux étant destinés à alimenter en fluide hydraulique chacun une chambre de commande, le troisième canal étant destiné à alimenter en fluide hydraulique les deux chambres de compensation, lesdits trois canaux distincts étant aptes à coopérer avec trois canaux prévus dans ledit moyeu extérieur, deux premiers canaux étant aptes à coopérer avec lesdits deux premiers canaux du moyeux intérieur et débouchant chacun en un point de la surface latérale externe dudit moyeu extérieur, un troisième canal étant apte à coopérer avec ledit troisième canal du moyeu intérieur, ayant une forme en « Y » et débouchant en deux points de la surface latérale externe dudit moyeu extérieur.

D'autres caractéristiques et avantages de la présente invention apparaîtront à l'examen de la description qui va suivre et des figures ci-annexées, données à titre d'exemples non limitatifs, dans lesquelles :
- la figure 1 représente le schéma de principe du circuit d'alimentation hydraulique des différentes chambres de commande et de compensation dans un embrayage double humide conforme à l'invention ;
- la figure 2 représente un premier mode de réalisation d'un embrayage double humide conforme à l'invention notamment de l'embrayage double représenté schématiquement à la figure 1 ;
- la figure 3 représente un deuxième mode de réalisation d'un embrayage double humide conforme à l'invention.

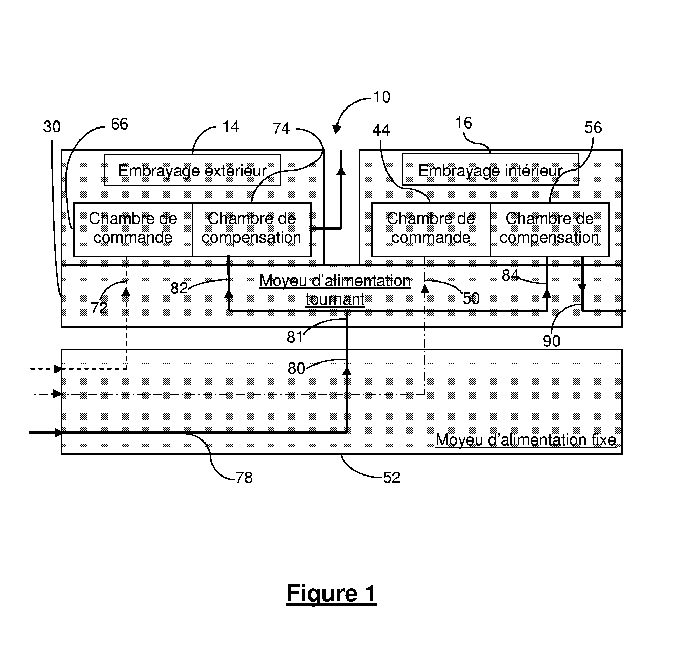

La figure 1 représente le schéma de principe du circuit d'alimentation hydraulique des différentes chambres de commande 66, 44 et de compensation 74, 56 d'un embrayage double 10.

On peut notamment remarquer que l'alimentation hydraulique de chacune des chambres de commandes 66, 44 est réalisée par un canal 50, 72 propre et indépendant depuis le moyeu fixe 52 jusqu'à la chambre de commande 66, 44. Cependant, l'alimentation hydraulique des chambres de compensation 74, 56 est réalisée par un canal axial 78 et un canal radial 80, communs dans le moyeu fixe 52 d'alimentation, et un canal radial 81 dans le moyeu tournant 30 débouchant sur deux canaux secondaires 82, 84 indépendants dans le moyeu tournant 30, chacun de ses canaux secondaires 82, 84 alimentant une chambre de compensation 74, 56.

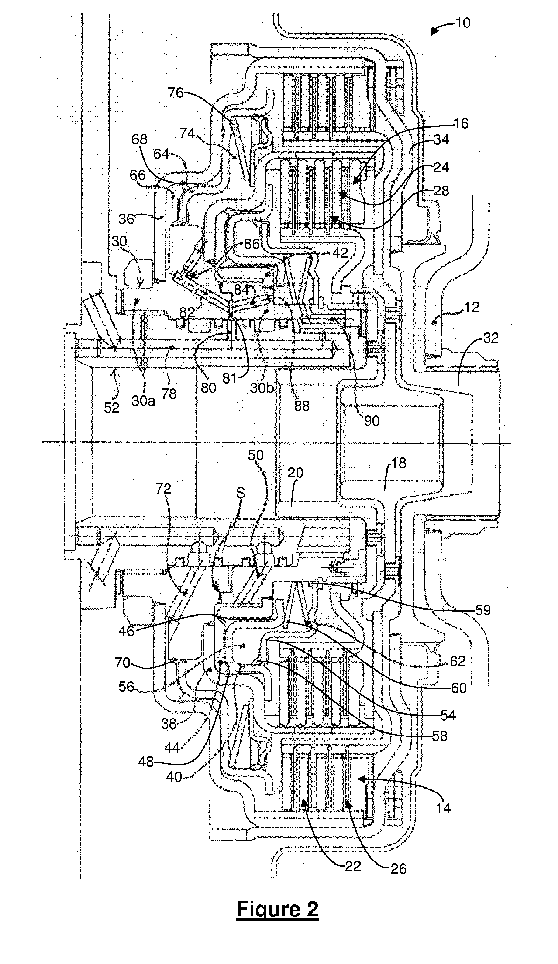

La figure 2 représente un schéma de l'embrayage double 10 selon l'invention, monté entre un moteur et une boîte de vitesses. Par convention les éléments de cet embrayage correspondant aux éléments présentés à la figure 1 portent la même référence.

Le moteur n'est pas représenté sur la figure 2. Seul le moyeu 12 de sortie de l'amortisseur placé entre le moteur et l'embrayage 10 est représenté, ce moyeu 12 entraînant le double embrayage 10. Cet amortisseur empêche la propagation des vibrations du moteur dans l'embrayage 10.

L'embrayage double 10 comporte deux embrayages 14, 16 permettant chacun de transmettre le mouvement de rotation du moyeu de sortie de l'amortisseur 12 à au moins l'un des deux moyeux de sortie de l'embrayage via les cannelures 18, 20 correspondant. Les deux embrayages, multi disques, sont ici montés de manière coaxiale, l'un à l'intérieur de l'autre et comportent des disques d'embrayage 22, 24 et des plateaux de friction 26, 28 aptes à être mis en oeuvre. Le moyeu 12 entraîne en rotation le moyeu tournant 30 via un ensemble comportant la flasque 32, la cloche 34 et la cloche 36. Sur ce moyeu tournant 30 sont soudées deux cloches 36, 38 qui délimitent respectivement l'embrayage extérieur 14 et l'embrayage intérieur 16. Le moyeu tournant est formé de deux pièces 30a, 30b solidarisées par un joint de soudure S.

L'embrayage intérieur 16 est commandé par un piston annulaire 40 en forme de « U », monté coulissant entre un moyeu annulaire 42 soudé sur le moyeu tournant 30, et la cloche 38. Le piston 40, le moyeu annulaire 42 et la cloche 38 définissent une chambre de commande 44 du mouvement du piston 40, fermée de manière étanche au moyen de joints d'étanchéité à lèvres 46, 48 montés sur le piston 40. Cette chambre de commande 44 est alimentée en fluide hydraulique par le canal 50 qui permet de faire circuler le fluide hydraulique depuis un moyeu d'alimentation fixe 52 jusqu'à la chambre de commande 44 via le moyeu tournant 30.

Tout fluide hydraulique permettant de transmettre une pression au piston 40 est apte à être utilisé pour cette application. En particulier, un fluide hydraulique tel que l'huile est bien adapté à cet usage.

Par ailleurs, le piston 40, le moyeu tournant 30 et une cloche 54 montée fixe par rapport au moyeu tournant 30, définissent une chambre de compensation 56 fermée de manière étanche au moyen d'un joint d'étanchéité à lèvres 58 et d'un joint 59 montés sur la cloche 54. A l'intérieur de cette chambre de compensation 56 sont montées, en opposition, deux rondelles métalliques 60, 62 coniques élastiques, exerçant une force de rappel sur le piston 40 vers sa position de repos, éloigné des disques d'embrayage 24 et des plateaux de friction 28. Pour une même course de piston et un même effort de rappel, deux rondelles coniques en opposition sont moins encombrantes radialement qu'une seule rondelle conique.

L'embrayage extérieur 14 est commandé par un piston 64, monté coulissant entre le moyeu tournant 30 et la cloche 36. Le piston 64, la cloche 36 et le moyeu tournant 30 définissent une chambre de commande 66 du mouvement du piston 64, fermée de manière étanche au moyen de joints à lèvre 68, 70 montés sur le piston 64. Cette chambre de commande 66 est alimentée par le canal 72 qui permet de faire circuler le fluide hydraulique depuis le moyeu fixe 52 jusqu'à la chambre de commande 66 via le moyeu tournant 30.

Par ailleurs, le piston 64, le moyeu tournant 30 et la cloche 38 définissent une chambre de compensation 74, fermée de manière étanche. A l'intérieur de cette chambre de compensation 74 est montée une rondelle conique élastique 76, exerçant sur le piston 64 une force de rappel vers sa position de repos, éloigné des disques d'embrayages 22 et des plateaux de frictions 26.

L'alimentation hydraulique des deux chambres de compensation 74, 56 est réalisée à l'aide d'un circuit hydraulique ne comprenant qu'un unique canal axial 78 et un unique canal radial 80 dans le moyeu fixe 52. Cet unique canal radial 80 coopère avec un canal 81, prévu dans le moyeu tournant 30, qui débouche sur deux canaux 82, 84 dans le moyeu tournant 30. Le canal 82 alimente la chambre 74 au travers d'un gicleur 86. Le canal 84 alimente la chambre 56 au travers d'un gicleur 88. Le fluide hydraulique est évacué de la chambre 74 au travers d'un canal non représenté. Le fluide hydraulique est évacué de la chambre de compensation 56 au travers du canal 90, situé dans le moyeu tournant 30.

Le circuit d'alimentation des chambres de compensation 56, 74 ne comprend donc qu'un canal axial 78 dans le moyeu fixe d'alimentation 52 et un seul canal radial 80 permettant le passage du fluide hydraulique depuis ce moyeu fixe d'alimentation 52 vers le moyeu d'alimentation tournant 30. Par rapport à une alimentation traditionnelle à deux canaux axiaux et deux canaux radiaux, le montage conforme à l'invention permet une réduction de l'encombrement axial de l'embrayage, notamment au niveau du moyeu fixe d'alimentation 52.

Le refroidissement des deux embrayages est assuré par un débit d'huile issu du moyeu fixe 52 jusqu'à une sortie non représentée.

Pour mettre en oeuvre un embrayage, par exemple, l'embrayage intérieur 16, on commande le déplacement du piston 40 en comprimant le fluide hydraulique contenu dans la chambre de commande 44. Le piston 40 va ainsi plaquer les disques d'embrayages 24 sur les plateaux de pression 28 et ainsi permettre l'entraînement en rotation d'un moyeu de sortie.

Pour relâcher l'embrayage intérieur 16, on arrête de comprimer le fluide hydraulique contenu dans la chambre de commande 44. Les rondelles coniques élastiques 60, 62 ainsi que la différence de pression dynamique dans les chambres de commande et de compensation exercent alors une force suffisante pour repousser le piston 40 jusqu'à sa position de repos, c'est-à-dire éloigné des disques d'embrayage 24 et des plateaux de frictions 28.

On peut remarquer qu'avec un tel dispositif, il est possible de mettre en oeuvre les deux embrayages 14, 16 simultanément en comprimant le fluide hydraulique contenu dans la chambre de commande 44 et dans la chambre de commande 66, l'alimentation de ces deux chambres étant totalement indépendante.

Les chambres de commande sont toujours remplies de fluide hydraulique, l'actionnement des pistons étant commandé par la pression de ce fluide hydraulique dans les chambres de commande.

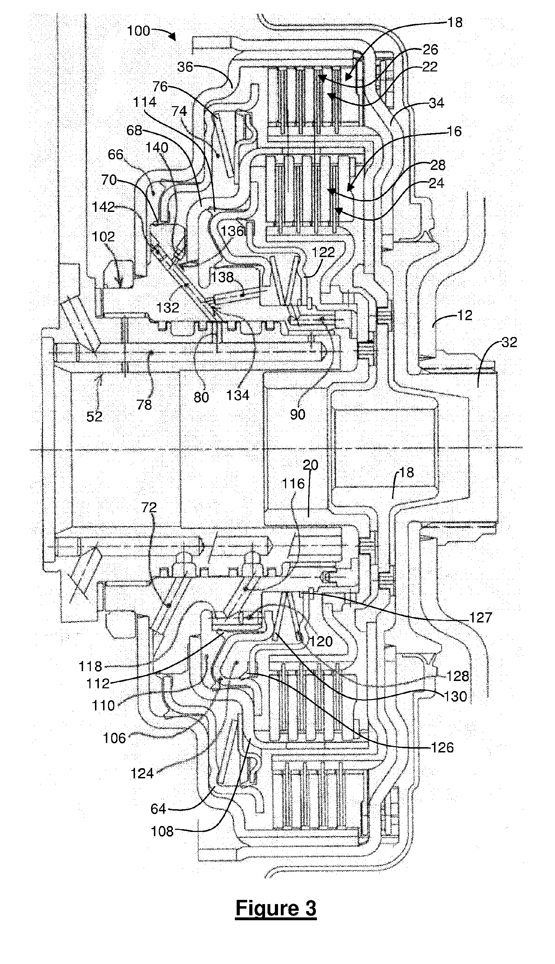

La figure 3 représente un deuxième mode de réalisation d'un embrayage double humide multi disques 100 conforme à l'invention.

L'embrayage double 100 est réalisé selon le même principe que celui de l'embrayage 10 et, de ce fait, peut être associé à un circuit hydraulique tel que celui de la figure 1. En particulier, comme il apparaîtra aisément à la lecture de la description ci-après en référence à la figure 3, le moyeu tournant porte la référence 102 et non 30, comme à la figure 1. La chambre de commande et la chambre de compensation de l'embrayage intérieur sont respectivement référencées 110 (au lieu de 44) et 124 (au lieu de 56). L'unique canal prévu dans le moyeu tournant porte la référence 132, et non plus 81, et débouche sur deux canaux 138, 140 au lieu, respectivement de 84 et 82. Enfin, le canal d'alimentation de la chambre de commande de l'embrayage intérieur porte la référence 116 au lieu de 50 dans le cas de la figure 1.

Les pièces identiques à celles de la figure 2 sont représentées avec la même référence numérique. Ces pièces ne seront pas décrites plus en détails par la suite.

Dans cette variante 100, le moyeu d'alimentation tournant 102 est monobloc, de forme légèrement différente au moyeu d'alimentation 30 de la figure 2.

L'embrayage intérieur 16 est commandé par un piston 106 annulaire à profil de « U », monté coulissant entre le moyeu d'alimentation tournant 102 et la cloche 108. Le piston 106, le moyeu d'alimentation tournant 102 et la cloche 108 définissent une chambre de commande 110 du mouvement du piston 106, fermée de manière étanche au moyen de joints à lèvres 112, 114 monté sur le piston 106. La chambre de commande 110 est alimentée en fluide hydraulique par les canaux 116, 118. L'extrémité du canal 118 ne débouchant pas dans la chambre de commande 110 est obturée par un bouchon étanche 120.

Par ailleurs, le piston 106, le moyeu tournant 102 et une cloche 122 montée immobile par rapport au moyeu tournant 102, définissent une chambre de compensation 124 fermée de manière étanche au moyen d'un joint à lèvres 126 et d'un joint 127 montés sur la cloche 122. A l'intérieur de cette chambre de compensation 124 sont montées, en opposition, deux rondelles 128, 130 coniques élastiques, exerçant une force de rappel sur le piston 106 vers sa position de repos, éloigné des disques d'embrayage 24 et des plateaux de friction 28.

L'alimentation hydraulique des deux chambres de compensation 74, 124 est réalisée à l'aide d'un circuit hydraulique ne comprenant qu'un unique canal axial 78 et un unique canal radial 80 dans le moyeu fixe 52. La circulation du fluide hydraulique dans le moyeu tournant 102 est réalisée dans un canal 132 débouchant sur deux canaux 138, 140. Le canal 138 alimente la chambre de compensation 124 au travers d'un gicleur 134. Le canal 140 alimente la chambre de compensation 74 au travers d'un le gicleur 136. Enfin, le canal 132 étant percé dans le moyeu tournant 102, son extrémité située au niveau de la chambre de commande 66 est obturé par un bouchon étanche 142.

Bien entendu, la présente invention n'est pas limitée aux modes de réalisation décrits, fournis à titre d'exemples illustratifs et non limitatifs. Elle peut par exemple très bien s'appliquer à un embrayage double humide à changements de rapport commandés hydrauliquement dont chaque embrayage est du type mono disque.

## Revendications

1. Embrayage double humide (10, 100) comprenant un moyeu d'alimentation fixe (52), un moyeu tournant (30, 102) par rapport audit moyeu fixe (52) monté sur ledit moyeu fixe (52), un embrayage à disque(s) intérieur (16) et un embrayage à disque(s) extérieur (14) coaxiaux, solidaires dudit moyeux tournant (30, 102), l'embrayage intérieur (16) étant commandé par un circuit de commande d'embrayage intérieur comprenant une première chambre de commande (44, 110) et une première chambre de compensation (56, 124), l'embrayage extérieur étant commandé par un circuit de commande d'embrayage extérieur comprenant une deuxième chambre de commande (66) et une deuxième chambre de compensation (74) **caractérisé en ce que** lesdites chambres de compensation (56, 124, 74) sont alimentées par un circuit d'alimentation comportant un unique canal (78) dans ledit moyeu d'alimentation fixe (52), un unique canal (81, 132) dans ledit moyeu tournant (30, 102) débouchant sur deux canaux secondaires (82, 84, 138, 140), respectivement un premier canal secondaire (84, 138) alimentant ladite première chambre de compensation (56, 124) et un deuxième canal secondaire (82, 140) alimentant ladite deuxième chambre de compensation (74).

2. Embrayage double humide selon la revendication 1, **caractérisé en ce que** le fluide hydraulique circulant dans la première chambre de compensation (56, 124) est évacuée de ladite chambre (56, 124) via un canal d'évacuation (90) prévu dans le moyeu tournant (30, 102).

3. Embrayage double humide selon l'une des revendications 1 ou 2, **caractérisé en ce que** ledit moyeu tournant (102) est monobloc.

4. Embrayage double humide selon l'une des revendications 1 ou 2, **caractérisé en ce que** ledit moyeu tournant (30) est réalisé en deux parties principales (30a, 30b), de préférence soudées.

5. Embrayage double humide selon l'une quelconque des revendications précédentes, **caractérisé en ce que** le rappel d'au moins un piston d'embrayage (40, 64, 106) est réalisé au moyen de deux rondelles coniques élastiques montées en opposition dans ladite chambre de compensation correspondante (56, 124, 74).

6. Embrayage double humide selon l'une quelconque des revendications précédentes, **caractérisé en ce que** le rappel dudit piston (40, 106) de l'embrayage intérieur (16) est réalisé au moyen de deux rondelles (60, 62, 128, 130) coniques élastiques montées en opposition dans ladite première chambre de compensation (56, 124).

7. Embrayage double humide selon l'une quelconque des revendications précédentes, **caractérisé en ce que** la piste intérieure dudit piston (40, 106) annulaire de l'embrayage intérieur (16) est rapportée sur ledit moyeu tournant (30, 102).

8. Embrayage double humide selon l'une des revendications précédentes, **caractérisé en ce que** chacun des deux embrayages (14, 16) aptes à être mis en oeuvre comporte une pluralité de disques d'embrayage (22, 24) et une pluralité de plateaux de friction (26, 28).

9. Agencement de deux moyeux intérieur (52) et extérieur (30, 102) coaxiaux, montés l'un à l'intérieur de l'autre, aptes à être intégrés dans un embrayage double humide (10, 100) selon l'une des revendications précédentes, **caractérisé en ce que** ledit moyeu intérieur (52) comporte trois canaux (78) distincts débouchant sur la surface latérale extérieure dudit moyeu intérieur (52), deux premiers canaux étant destinés à alimenter en fluide hydraulique chacun une chambre de commande (44, 66, 110), le troisième canal (78) étant destiné à alimenter en fluide hydraulique les deux chambres de compensation (56, 124, 74), lesdits trois canaux distincts (78) étant aptes à coopérer avec trois canaux (72, 80, 116, 50) prévus dans ledit moyeu extérieur (30, 102), deux premiers canaux (72, 116, 50) étant aptes à coopérer avec lesdits deux premiers canaux du moyeux intérieur (52) et débouchant chacun en un point de la surface latérale externe dudit moyeu extérieur (30, 102), un troisième canal (80), étant apte à coopérer avec ledit troisième canal (78) du moyeu intérieur (52), ayant une forme en « Y » et débouchant en deux points de la surface latérale externe dudit moyeu extérieur (30, 102).
